# EUROPÄISCHE PATENTANMELDUNG

(11) **EP 3 932 591 A1**
(43) Veröffentlichungstag der Anmeldung: **05.01.2022**
(21) Anmeldenummer: 20193734.9
(22) Anmeldetag: 31.08.2020
(51) Int. Cl.: B22F 3/22, B22F 7/06, B33Y 10/00, B33Y 80/00, H02K 1/02, H02K 15/02, B22F 10/00

(54) **MAGNETBLECH, VERFAHREN ZUR FERTIGUNG EINES MAGNETBLECHS, ROTOR UND ELEKTRISCHE MASCHINE**

(30) Priorität: 30.06.2020 DE 102020208160
(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Das Magnetblech weist eine erste Komponente mit, insbesondere aus, einem magnetischen ersten Material und eine zweite Komponente mit, insbesondere aus, einem zweiten Material auf und bildet mit erster und zweiter Komponente ein Sinterteil, wobei erste und zweite Komponente mittels einer Fügelinie getrennt sind und das Magnetblech beabstandet von der Fügelinie mindestens eine Aussparung aufweist.

Bei dem Verfahren zur Fertigung eines Magnetblechs wird ein solches Magnetblech, welches mit erster und zweiter Komponente ein Sintergrünteil bildet, herangezogen und gesintert, wobei die mindestens eine Aussparung nachfolgend vorzugsweise gefüllt wird, insbesondere mit einem Metall und/oder mit einem Polymer und/oder mit einer Keramik.

Der Rotor weist ein oder mehrere solcher und/oder derart gefertigter Magnetbleche auf.

Die elektrische Maschine weist einen solchen Rotor auf.

## Beschreibung

Die Erfindung betrifft ein Magnetblech, ein Verfahren zur Fertigung eines Magnetblechs sowie einen Rotor und eine elektrische Maschine.

Ein neues additives Verfahren zur Herstellung von Magnetblechen für elektrische Maschinen stellt das Drucken, insbesondere Siebdrucken und/oder Schablonendrucken, von Magnetblechen dar. Für das Drucken von Magnetblechen wird zunächst mit Metallpulvern eine Druckpaste hergestellt und diese dann mittels einer Sieb- und/oder Schablonendrucktechnik zu einem Grünkörper verarbeitet. Der Grünkörper, nachfolgend auch als Grünteil oder Sintergrünteil bezeichnet, wird anschließend durch thermische Behandlung, d.h. durch Entbinderung und Sinterung, in ein metallisches, strukturiertes Blech überführt.

Besonders relevant ist beim Drucken von Magnetblechen die Möglichkeit, aus mehreren Komponenten, d.h. aus mehr als einem Material, bestehende Magnetbleche zu fertigen, um funktionale Eigenschaften, also mechanische oder magnetische oder thermische oder elektrische Eigenschaften, lokal gezielt durch eine selektive Werkstoffwahl einzustellen.

Dazu ist es erforderlich, zwei oder mehr verschiedene Metallpasten auf ein flächiges Substrat hintereinander aufzudrucken und sie anschließend gemeinsam zu einem mechanisch stabilen und verzugsfreien Verbund zu sintern.

Die zumeist unterschiedlichen Schwindungsverläufe der Komponenten und unterschiedlichen thermischen Ausdehnungskoeffizienten der verwendeten Metallpulver führen oft zu unterschiedlichen Sinterschwindungen und folglich zu Materialspannungen innerhalb der Komponenten des Magnetblechs.

Zudem können während des Abkühlens des verfestigten Verbundes der Komponenten unterschiedliche thermische Ausdehnungskoeffizienten der Komponenten mechanische Spannungen begünstigen, die sich in unerwünschten Bauteil-Verformungen, insbesondere Verwölbungen, zeigen. Insbesondere beim gewünschten Einschrumpfen eines ersten Materials in ein zweites Material zwecks Herstellung von Verzahnungsstrukturen ist dies sehr nachteilig.

Es ist bekannt, Sinteraktivitäten von Ausgangsstoffen anzupassen oder Zuschlagstoffe einzusetzen sowie Änderungen der Prozessführung vorzunehmen, um ein gleichmäßigeres Schwindungsverhalten zu erhalten. Zudem ist es bekannt, Haftvermittlungsschichten oder Umrahmungs- und Verzahnungsbereiche einzubringen. Ferner ist es bekannt, Komponenten separat zu sintern und nachträglich zusammenzufügen. Allerdings bedingen solche Lösungen zugleich ungewollte Beschränkungen der zu fertigenden Magnetbleche.

Es ist daher Aufgabe der Erfindung, ein verbessertes Magnetblech zu schaffen, welches insbesondere frei von oder arm an Materialspannungen ist. Zudem ist es Aufgabe der Erfindung, ein Verfahren zur Fertigung eines solchen Magnetblechs anzugeben. Ferner ist es Aufgabe der Erfindung, einen verbesserten Rotor und eine verbesserte elektrische Maschine zu schaffen.

Die Aufgabe der Erfindung wird mit einem Magnetblech mit den in Anspruch 1 angegebenen Merkmalen und mit einem Verfahren zur Fertigung eines Magnetblechs mit den in Anspruch 8 angegebenen Merkmalen und mit einem Rotor mit den in Anspruch 9 angegebenen Merkmalen sowie mit einer elektrischen Maschine mit den in Anspruch 10 angegebenen Merkmalen gelöst. Bevorzugte Weiterbildungen sind in den zugehörigen Unteransprüchen, der nachfolgenden Beschreibung und der Zeichnung angegeben.

Das erfindungsgemäße Magnetblech weist eine erste Komponente mit, insbesondere aus, einem magnetischen ersten Material und eine zweite Komponente mit, insbesondere aus, einem zweiten Material auf und bildet mit erster und zweiter Komponente ein Sinterteil oder ein Sintergrünteil, wobei erste und zweite Komponente mittels einer Fügelinie getrennt sind, und wobei das Magnetblech beabstandet von der Fügelinie mindestens eine Aussparung aufweist. Zweckmäßig erstreckt sich die Aussparung nicht entlang eines Mittelpunkts des Magnetblechs.

Es versteht sich, dass Aussparungen im Sinne der vorliegenden Erfindung flächige Bereiche, d.h. Bereiche, welche sich senkrecht zu einer Dickenrichtung des Magnetblechs erstrecken, meinen, welche frei von dem sie umgebenden Material bleiben. Die Aussparungen sind dabei entlang der gesamten Dicke des Magnetblechs frei von dem sie umgebenden Material. Es versteht sich ferner, dass Aussparungen zum einen frei gelassene Bereiche bei einer additiven Fertigung bedeuten können oder aber nach einer vollflächigen Fertigung ausgenommene, d.h. subtraktiv entfernte, Bereiche der ersten und/oder zweiten Komponente des Magnetblechs bezeichnen können. Auf die konkrete Fertigungsart kommt es beim Begriff der *Aussparung* also nicht notwendig an.

Mittels der erfindungsgemäß vorgesehenen mindestens einen Aussparung ist das erfindungsgemäße Magnetblech mit zumindest zwei Komponenten wesentlich zuverlässiger und präziser fertigbar. So erlauben die eine oder die mehreren Aussparungen ein Ko-Sintern der ersten und der zweiten Komponente, indem diese Aussparungen lokale mechanische Spannungen an der Fügelinie zwischen erster und zweiter Komponente beim Sintern und/oder Abkühlen mechanisch puffern. D.h. die Aussparung/en kann oder können mechanische Spannungen nahe der Fügelinie in weitere Bereiche der ersten und/oder zweiten Komponente verteilen, sodass Beschädigungen der ersten und/oder zweiten Komponente beim Sintern oder Abkühlen vermeidbar sind. Ein lokales Verziehen oder Anreißen von erster und/oder zweiter Komponente beim Sintern oder Abkühlen tritt bei dem erfindungsgemäßen Magnetblech nicht auf.

Vorteilhaft sind bei dem erfindungsgemäßen Magnetblech nachgelagerte Korrekturprozesse infolge einer Verformung oder Beschädigung des Magnetblechs nicht erforderlich, da Verformungen oder Beschädigung erfindungsgemäß einfach vermeidbar sind.

Insbesondere können auch Magnetbleche mit ansonsten schwer kombinierbaren ersten und zweiten Komponenten realisiert werden. Auf diese Weise können auch ansonsten kaum realisierbare Eigenschaften des Magnetblechs realisiert werden. Insbesondere kann das erfindungsgemäße Magnetblech verbesserte magnetische Eigenschaften aufweisen, da infolge der geringeren mechanischen Verspannung auch Domänenverspannungen deutlich reduziert sein können.

Das erfindungsgemäße Magnetblech weist zudem bessere elektrische und/oder thermische und/oder mechanische Eigenschaften auf, da nachteilige Materialanpassungen oder Nachbearbeitungen des Magnetblechs mit unerwünschten Einflüssen auf die vorhergehend genannten Eigenschaften nicht erforderlich sind.

Zweckmäßig sind die eine oder mehreren Aussparungen bei dem erfindungsgemäßen Magnetblech mittels eines Druckverfahrens, insbesondere mittels Siebdrucks und/oder Schablonendrucks, in die erste und/oder zweite Komponente des Magnetblechs eingebracht. Alternativ und ebenfalls bevorzugt ist die Aussparung eine Ausnehmung, d.h. mittels subtraktiver Verfahren in die erste und/oder zweite Komponente des erfindungsgemäßen Magnetblechs eingebracht, insbesondere mittels Stanzens und/oder mittels Lithographie und/oder mittels Laserstrukturierung.

Bei dem erfindungsgemäßen Magnetblech weisen die zumindest eine oder mehreren Aussparungen vorteilhaft eine flächige Gestalt auf, insbesondere eine Gestalt in Form eines Kreises oder eines Ovals und/oder eines Vielecks. Geeigneterweise kann die zumindest eine Aussparung abgerundete Ecken aufweisen, etwa mit einem Radius von höchstens einem Viertel der Abmessungen von Kanten der Aussparung. Alternativ und ebenfalls vorteilhaft können die zumindest eine oder die mehreren Aussparungen schlitzförmig ausgebildet sein, vorzugsweise S-förmig oder T-förmig oder I-förmig. Besonders bevorzugt bilden mehrere Aussparungen eine auxetische Struktur in der ersten und/oder zweiten Komponente aus. Infolge der Aussparungen können auftretende, thermisch induzierte Spannungen aus dem Bereich um die Fügelinie in die umgebende Fläche verteilt werden. Somit ist das Risiko einer Beschädigung oder Deformierung der ersten und/oder zweiten Komponente und folglich des erfindungsgemäßen Magnetblechs reduziert.

Bei dem erfindungsgemäßen Magnetblech sind die eine oder mehreren Aussparungen vorzugsweise nicht an einem Mittelpunkt des Magnetblechs befindlich. Vorzugsweise sind bei dem erfindungsgemäßen Magnetblech die einen oder mehreren Aussparungen höchstens 3 Zentimeter, vorzugsweise höchstens 1,5 Zentimeter und idealerweise höchstens 0,5 Zentimeter von der Fügelinie zwischen erster und zweiter Komponente entfernt.

Auf diese Weise sind die Aussparungen in denjenigen Bereichen des erfindungsgemäßen Magnetblechs befindlich, in welchen typisch die höchsten mechanischen Spannungen beim Sintern und/oder Abkühlen der ersten und zweiten Komponente auftreten.

Vorteilhaft sind bei dem erfindungsgemäßen Magnetblech die mindestens eine Aussparung oder die mehreren Aussparungen in der ersten Komponente und/oder der zweiten Komponente vorgesehen.

Vorzugsweise sind bei dem erfindungsgemäßen Magnetblech zwei oder mehr Aussparungen vorgesehen, welche insbesondere äquidistant zur Fügelinie angeordnet sind.

Bevorzugt bilden bei dem Magnetblech gemäß der Erfindung die Aussparungen eine oder mehrere Gruppen.

Bei dem erfindungsgemäßen Magnetblech bilden die Aussparungen vorzugsweise mehrere Gruppen, welche äquidistant zur Fügelinie angeordnet sind.

Vorzugsweise sind die Aussparungen symmetrisch um die Fügelinie oder parallel zur Fügelinie angeordnet. Auf diese Weise kann beispielsweise bei Verzahnungsstrukturen von erster und zweiter Komponente eine Homogenisierung der bei erster und/oder zweiter Komponente auftretenden mechanischen Spannungen erreicht werden.

Zweckmäßig weisen bei dem Magnetblech gemäß der Erfindung die zumindest eine oder die mehreren Aussparungen jeweils eine, vorzugsweise längste, Abmessung auf, welche höchstens 20 Millimeter, vorzugsweise höchstens 10 Millimeter, insbesondere höchstens 5 Millimeter und idealerweise höchstens 1 Millimeter misst.

Geeigneterweise ist bei dem erfindungsgemäßen Magnetblech die zumindest eine Aussparung mit einem Füllmaterial, insbesondere mit einem Metall und/oder mit einem Polymer und/oder mit einer Keramik gefüllt.

Auf diese Weise ist die mechanische Stabilität, insbesondere die Steifigkeit, des erfindungsgemäßen Magnetblechs, verbessert. Zudem können Dämpfungseigenschaften oder eine thermische Eigenschaft, insbesondere eine Wärmeleitfähigkeit, des erfindungsgemäßen Magnetblechs verbessert sein.

Bei dem erfindungsgemäßen Verfahren zur Fertigung eines Magnetblechs wird ein Magnetblech wie vorhergehend beschrieben herangezogen, welches mit erster und zweiter Komponente ein Sintergrünteil bildet und welches gesintert wird. Vorzugsweise wird nachfolgend, d.h. nachdem das Magnetblech gesintert worden ist, die zumindest eine Aussparung gefüllt, insbesondere mit einem Metall und/oder mit einem Polymer und/oder mit einer Keramik.

Der erfindungsgemäße Rotor weist eines oder mehrere Magnetbleche wie vorhergehend beschrieben und/oder gefertigt wie vorhergehend beschrieben auf.

Die erfindungsgemäße elektrische Maschine weist einen erfindungsgemäßen Rotor wie vorhergehend beschrieben auf.

Die erfindungsgemäße elektrische Maschine bildet bevorzugt einen Motor und/oder einen Generator.

Nachfolgend wird die Erfindung anhand eines in der Zeichnung dargestellten Ausführungsbeispiels näher erläutert. Es zeigen:
- Fig. 1: ein erfindungsgemäßes zweikomponentiges Magnetblech mit Aussparungen schematisch in einer Draufsicht,
- Fig. 2: Aussparungen gem. Fig. 1 sowie alternative Weiterbildungen der Aussparungen,
- Fig. 3: ein weiteres Ausführungsbeispiel eines erfindungsgemäßen zweikomponentigen Magnetblechs mit einer Einzelheit einer Fügelinie zwischen zwei Komponenten des Magnetblechs schematisch in einer Draufsicht sowie
- Fig. 4: einen erfindungsgemäßen Elektromotor mit einem Rotor mit erfindungsgemäßen Magnetblechen gem. Fig. 1 oder Fig. 3.

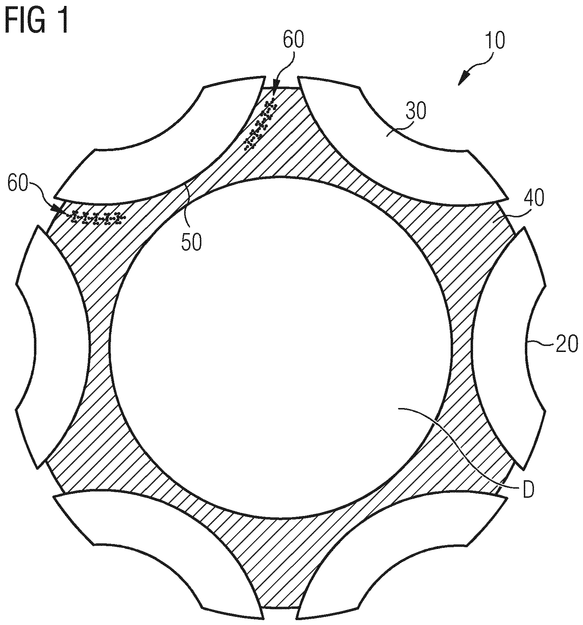

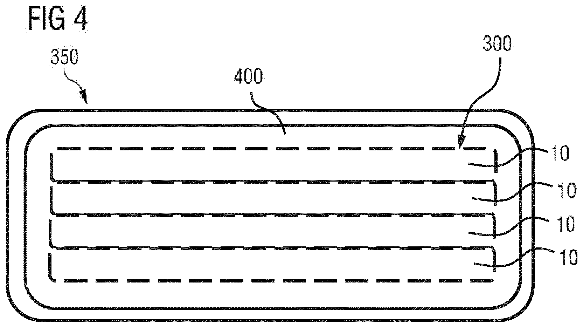

Das in Fig. 1 dargestellte erfindungsgemäße zweikomponentige Magnetblech 10 weist eine kreisrunde Durchführung D für eine Rotorachse eines erfindungsgemäßen Rotors (Fig. 4) eines erfindungsgemäßen Elektromotors (Fig. 4) auf. Dabei bilden die Magnetbleche 10 den erfindungsgemäßen Rotor (s. Fig. 4).

Das zweikomponentige Magnetblech 10 weist in flächigen Erstreckungen, d.h. in Richtungen parallel zur Zeichenebene, eine Außenkontur 20 eines sechsstrahligen Sterns auf, wobei die Außenkontur 20 zwischen den Spitzen des Sterns den Teilen von Kreisbögen entspricht.

Entlang der Außenkonturen 20 des Magnetblechs 10 weist das Magnetblech 10 erste mit magnetischem Material gebildete Komponenten 30 auf, welche als Teile von Kreisringen geformt sind.

In flächigen Erstreckungen des Magnetblechs 10 innenliegend bezüglich der ersten Komponenten 30 des Magnetblechs 10 weist das Magnetblech 10 eine zweite, mit unmagnetischem Material gebildete Komponente 40 auf. Erste Komponente 30 und zweite Komponente 40 bilden miteinander eine Fügelinie 50 aus, entlang welcher erste Komponente 30 und zweite Komponente 40 aneinander anliegen.

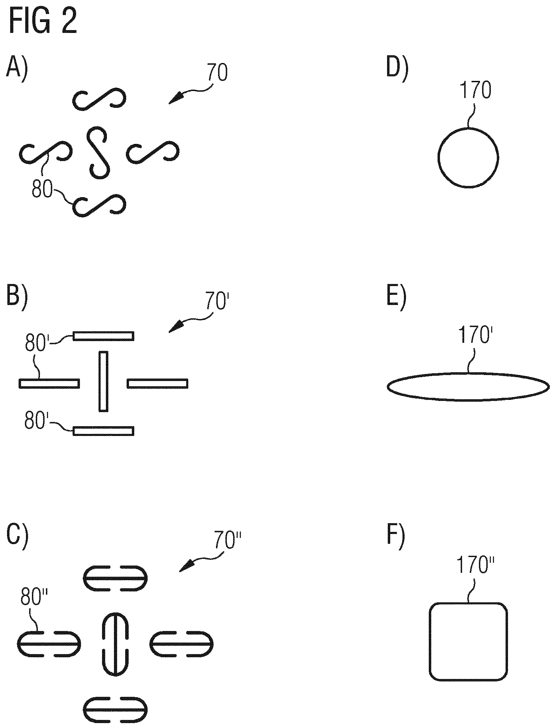

Um die mechanischen Spannungen infolge eines unterschiedlichen Sinterschwundes der ersten Komponenten 30 und der zweiten Komponente 40 zu reduzieren, weist die zweite Komponente 40 des Magnetblechs 10 Aussparungen 60 auf, welches mechanische Spannungspuffer des Magnetblechs 10 bilden. Diese Aussparungen 60 weisen im in Fig. 1 dargestellten Ausführungsbeispiel die Gestalt einer Gruppe 70 mehrerer Schlitze 80 auf, welche eine hinreichende mechanische Flexibilität und Weitbarkeit aufweisen, sodass mechanischen Spannungen mechanisch effizient gepuffert werden können. Die Gestalt der Gruppe 70 der Schlitze 80 ist in Fig. 2 A vergrößert dargestellt.

Die Schlitze 80 weisen in flächigen Erstreckungen des Magnetblechs 10, d.h. in Zeichenebene, betrachtet ein Aspektverhältnis von mindestens 5 auf, d.h. der Schlitz 80 erstreckt sich jeweils entlang einer Länge, welche die jeweilige Breite des Schlitzes jeweils um einen Faktor von zumindest 5 übersteigt. Im dargestellten Ausführungsbeispiel übersteigt das Aspektverhältnis den Wert 16.

Es versteht sich, dass unter dem Begriff Aspektverhältnis im Rahmen der vorliegenden Erfindung nicht ein Aspektverhältnis einer den oder die Schlitze 80 umhüllenden geometrischen Figur handelt, sondern es geht die tatsächlich dem Verlauf des Schlitzes folgende Länge dieses Schlitzes in den Quotienten aus Länge zu Breite des Schlitzes, welcher das Aspektverhältnis des Schlitzes bildet, ein. Es versteht sich ferner, dass unter der Breite jeweils die geringste Breite des Schlitzes zu verstehen ist. Insbesondere bemisst sich die Breite des Schlitzes außerhalb von ggf. in den einzelnen nachfolgend beschriebenen Ausführungsbeispielen vorhandenen Verzweigungsstellen.

Im in Figur 2 A dargestellten Ausführungsbeispiel verlaufen die Schlitze 80 jeweils S-förmig. Die Schlitze 80 sind dabei in Gruppen 70 von jeweils fünf Schlitzen 80 angeordnet. Von vieren dieser Schlitze 80 einer Gruppe 70 ist jeweils einer der Schlitze 80 jeweils an einem äußeren Stegende eines gedachten Kreuzes angeordnet, sodass die S-Form jedes dieser vier Schlitze 80 aufrecht und als "S" lesbar orientiert ist, wenn die S-Form derart betrachtet wird, dass ein der jeweiligen Gruppe 70 nächster Abschnitt der Fügelinie 50 vertikal verläuft. Ein fünfter Schlitz 80 ist an einer Stegkreuzung des gedachten Kreuzes angeordnet und um 90 Grad gegenüber den übrigen vier Schlitzen 80 verdreht. In dem in Fig. 1 dargestellten Ausführungsbeispiel fallen jeweils zwei an Stegenden des gedachten Kreuzes befindliche S-förmige Schlitze zusammen, sodass Gruppen 70 in Fig. 1 lediglich mit 4 S-förmigen Schlitzen 80 gebildet sind.

In einem weiteren in Fig. 2 B dargestellten Ausführungsbeispiel des erfindungsgemäßen Elektromotors 350 weist das Magnetblech 10 anstelle von Gruppen 70 S-förmiger Schlitze 80 Gruppen 70' I-förmiger Schlitze 80' (s. Fig. 2 B) auf. Die I-förmigen Schlitze 80' weisen keinen kurvigen, gekrümmten Verlauf, sondern jeweils einen Verlauf entlang einer geraden Strecke auf. Auch die I-förmigen Schlitze sind in Gruppen 70' angeordnet, in welchen von vier Schlitzen 80' je ein Schlitz 80' an je einem äußeren Stegende eines gedachten Kreuzes angeordnet ist. Ein fünfter Schlitz 80' ist um 90 Grad gegenüber den übrigen vier Schlitzen 80 verdreht an einer Stegkreuzung des gedachten Kreuzes angeordnet.

In einem weiteren in Fig. 2 C dargestellten Ausführungsbeispiel des erfindungsgemäßen Elektromotors 350 weisen die Schlitze 80" eine sich in Serifen verzweigende I-Form auf. Dabei verzweigt sich ein Balken der I-Form an seinen Längsenden in zwei serifenartige, sich senkrecht zur Längserstreckung des Balkens der I-Form fortstreckende Verzweigungen, welche einen derart um den Balken der I-Form gebogenen Verlauf einnehmen, dass sich die Enden der Verzweigungen parallel zum Balken der I-Form erstrecken. Auch die Schlitze 80" mit sich in Serifen verzweigender I-Form sind wie in den vorgenannten Ausführungsbeispielen in Gruppen 70" angeordnet.

Die Schlitze 80, 80', 80" weisen jeweils eine längste Abmessung von weniger als 5 Millimetern, in weiteren, nicht eigens dargestellten Ausführungsbeispielen eine längste Abmessung von weniger als einem Millimeter, auf.

In den weiteren, in Fig. 2 D bis 2 F gezeigten Ausführungsbeispielen sind die Aussparungen 60 nicht als Gruppe 70 von Schlitzen 80, sondern als einzelne, nicht schlitzförmige Aussparung ausgebildet. Die Aussparungen 60 können grundsätzlich als kreisförmige Aussparungen 170 wie in Fig. 2 D dargestellt oder als ellipsenförmige Aussparungen 170' wie in Fig. 2 E dargestellt oder als quaderförmige, hier quadratische, Aussparung 170" wie in Fig. 2 F dargestellt ausgebildet sein.

Die Aussparungen weisen jeweils eine längste Abmessung von weniger als 5 Millimetern, in weiteren, nicht eigens dargestellten Ausführungsbeispielen eine längste Abmessung von weniger als einem Millimeter, auf.

Die Gruppen 70, 70', 70" der Aussparungen sowie die einzelnen Aussparungen 170, 170', 170" der vorhergehend beschriebenen Ausführungsbeispiele sind jeweils mit einem einheitlichen Abstand von weniger als einem halben Zentimeter zur Fügelinie 50 in der zweiten Komponente 40 des Magnetblechs 10 eingebracht und liegen damit jeweils selbst auf gedachten Linien in Gestalt von Kreisbögen.

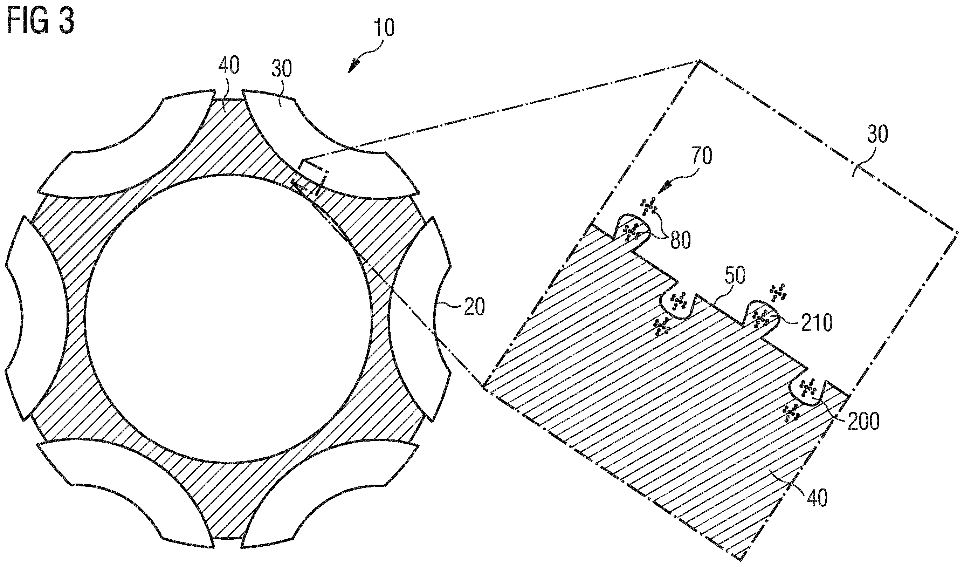

Die Fügelinie 50 muss dabei nicht notwendigerweise die Gestalt von Kreisbögen aufweisen. Stattdessen kann die Fügelinie 50 wie in Fig. 3 gezeigt eine mit Zähnen 200, 210 gezahnte Gestalt aufweisen, mittels welcher erste Komponente 30 und zweite Komponente 40 miteinander in der Art von Puzzleteilen verzahnt sind. D.h. sowohl erste Komponente 30 als auch zweite Komponente 40 weisen Zähne 200, 210 auf, welche ineinander eingreifen. Folglich sind erste Komponente 30 und zweite Komponente 40 miteinander infolge der Zähne 200, 210 zusätzlich zur stoffschlüssigen Verbindung auch formschlüssig miteinander verbunden.

Im in Fig. 3 dargestellten Ausführungsbeispiel sind die Aussparungen 60 nicht lediglich in der zweiten Komponente 40 des Magnetblechs 10 vorhanden, sondern die Aussparungen 60 befinden sich beiderseits der Fügelinie 50 in jeweils gleichen Abständen zur Fügelinie 50. Dabei sind im in Fig. 3 gezeigten Ausführungsbeispiel einige Aussparungen 60 in Zähne 200 der ersten Komponente 30 eingebracht. Mit demselben Abstand von der Fügelinie 50, wie ihn die Aussparungen 60 in den Zähnen 200 der ersten Komponente 30 aufweisen, befinden sich Aussparungen 60 an denjenigen Orten der zweiten Komponente 40, zu welchen sich die Zähne 200 der ersten Komponente 30 hinstrecken. Zugleich sind im in Fig. 3 gezeigten Ausführungsbeispiel einige Aussparungen 60 in Zähne 210 der zweiten Komponente 40 eingebracht. Mit demselben Abstand von der Fügelinie 50, wie ihn die Aussparungen 60 in den Zähnen 210 der zweiten Komponente 40 aufweisen, befinden sich Aussparungen 60 an denjenigen Orten der ersten Komponente 30, zu welchen sich die Zähne 210 der zweiten Komponente 40 hinstrecken.

Das erfindungsgemäße Magnetblech 10 wie oben beschrieben wird entweder als Sinterteil gefertigt oder bildet mit erster und zweiter Komponente ein Sintergrünteil, d.h. einen Grünkörper, der mittels Schablonendrucks siebgedruckt und gesintert wird und dann das endgültige Magnetblech bildet. Nachfolgend, d.h. nachdem das Magnetblech 10 gesintert worden ist, werden die Aussparungen 60 mit einem Metall, in weiteren alternativen Ausführungsbeispielen mit einem Polymer und/oder mit einer Keramik gefüllt.

Eine Mehrzahl derart gesinterter Magnetbleche 10 bildet wie in Fig. 4 dargestellt einen erfindungsgemäßen Rotor 300 eines erfindungsgemäßen Elektromotors 350. Dazu sind die Magnetbleche 10, welche jeweils Flachteile bilden, zu einem Stapel gestapelt, dessen Stapelrichtung sich senkrecht zu den flächigen Erstreckungen der Magnetbleche 10 erstreckt. Der erfindungsgemäße Rotor 300 ist drehbeweglich innerhalb eines Stators 400 angeordnet, welcher gemeinsam mit dem erfindungsgemäßen Rotor 300 den Elektromotor 350 bildet. In weiteren, nicht eigens dargestellten Ausführungsbeispielen bilden Rotor 300 und Stator 400 einen erfindungsgemäßen Generator.

## Patentansprüche

1. Magnetblech, welches eine erste Komponente (30) mit, insbesondere aus, einem magnetischen ersten Material und eine zweite Komponente (40) mit, insbesondere aus, einem zweiten Material aufweist und welches mit erster (30) und zweiter Komponente (40) ein Sinterteil oder ein Sintergrünteil bildet, wobei erste (30) und zweite Komponente (40) mittels einer Fügelinie (50) getrennt sind, wobei das Magnetblech (10) beabstandet von der Fügelinie (50) mindestens eine Aussparung (60) aufweist.

2. Magnetblech nach dem vorhergehenden Anspruch, bei welchem die mindestens eine Aussparung (60) in der ersten Komponente (30) und/oder der zweiten Komponente (40) vorgesehen ist.

3. Magnetblech nach einem der vorhergehenden Ansprüche, bei welchem zwei oder mehr Aussparungen (60) vorgesehen sind, welche insbesondere äquidistant zur Fügelinie (50) angeordnet sind.

4. Magnetblech nach einem der vorhergehenden Ansprüche, bei welchem die Aussparungen (60) eine oder mehrere Gruppen (70, 70', 70") bilden.

5. Magnetblech nach einem der vorhergehenden Ansprüche, bei welchem die Aussparungen (60) mehrere Gruppen (70, 70', 70") bilden, welche äquidistant zur Fügelinie (50) angeordnet sind.

6. Magnetblech nach einem der vorhergehenden Ansprüche, bei welchem die mindestens eine Aussparung (60) eine, vorzugsweise längste, Abmessung aufweist, welche höchstens 20 Millimeter, vorzugsweise höchstens 10 Millimeter, insbesondere höchstens 5 Millimeter und idealerweise höchstens 1 Millimeter misst.

7. Magnetblech nach einem der vorhergehenden Ansprüche, bei welchem die mindestens eine Aussparung (60) mit einem Füllmaterial, insbesondere mit einem Metall und/oder mit einem Polymer und/oder mit einer Keramik gefüllt ist.

8. Verfahren zur Fertigung eines Magnetblechs (10), bei welchem ein Magnetblech (10) nach einem der Ansprüche 1 bis 6, welches mit erster (30) und zweiter Komponente (40) ein Sintergrünteil bildet, herangezogen wird, und welches gesintert wird, wobei die mindestens eine Aussparung (60) nachfolgend vorzugsweise gefüllt wird, insbesondere mit einem Metall und/oder mit einem Polymer und/oder mit einer Keramik.

9. Rotor, aufweisend eines oder mehrere Magnetbleche (10) nach einem der vorhergehenden Ansprüche und/oder eines oder mehrere Magnetbleche (10) gefertigt nach einem Verfahren nach einem der vorhergehenden Ansprüche.

10. Elektrische Maschine, aufweisend einen Rotor (300) nach dem vorhergehenden Anspruch.

11. Elektrische Maschine nach dem vorhergehenden Anspruch, welche ein Motor (350) und/oder ein Generator ist.
